# EUROPEAN PATENT APPLICATION

(11) **EP 4 663 909 A1**
(43) Date of publication of application: **17.12.2025**
(21) Application number: 24181017.5
(22) Date of filing: 10.06.2024
(51) Int. Cl.: F02B 23/06, F02B 23/10, F02D 19/02, F02B 43/00

(54) **A PISTON FOR AN INTERNAL COMBUSTION ENGINE**

(71) Applicant: VOLVO TRUCK CORPORATION, 405 08 Göteborg (SE)
(72) Inventor: EISMARK, Jan, 414 72 Göteborg (SE); CHRISTENSEN, Magnus, 431 41 Mölndal (SE); SIMONSSON, Tommy, 444 47 Stenungsund (SE)
(74) Representative: Valea AB

(57) **Abstract**

The present disclosure relates to a piston (16) for an internal combustion engine (12) comprising a cylinder (14). The piston (16) is adapted to move reciprocally in the cylinder (14) of the internal combustion engine (12) along a reciprocal axis (A), whereby a combustion chamber (18) is at least partially delimited by the cylinder (14) and the piston (16). The piston (16) comprises a piston crown (20) adapted to face the combustion chamber (18), the piston crown (20) comprising a piston bowl surface (40), recessed in the piston (16) and circumferentially extending around a piston bowl centre axis (42) adapted to extend in a direction parallel to the reciprocal axis (A). The piston (16) also extends in a radial direction (R) being perpendicular to the extension of the piston bowl centre axis (42).

The piston bowl surface (40) defining a piston bowl (44) that, following the circumference of the piston bowl surface (40) around the piston bowl centre axis (42) in a plane perpendicular to the piston bowl centre axis (42), comprises a set of circumferentially spaced apart dividing protrusions (46, 48, 50, 52) and a set of circumferentially spaced apart colliding protrusions (54, 56, 58, 60).

## Description

### TECHNICAL FIELD

The disclosure relates generally to internal combustion engines. In particular aspects, the disclosure relates to a piston for an internal combustion engine. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A contemporary internal combustion engines may comprise one or more pistons, each one of which generally being adapted to move reciprocally in an individual cylinder of the internal combustion engine. In order to arrive at an appropriate combustion in a combustion chamber at least partially defined by a piston, its associated cylinder and possibly also a cylinder head, the piston may comprise a piston crown with a piston bowl. The piston bowl may have a shape enabling fuel and air to be appropriately mixed before and/or during combustion which in turn may imply an appropriately efficient combustion. However, although different shapes of the piston bowl are publicly known, there is still room for further developments of pistons for internal combustion engines.

### SUMMARY

According to a first aspect of the disclosure, there is provided a piston for an internal combustion engine comprising a cylinder, the piston being adapted to move reciprocally in the cylinder of the internal combustion engine along a reciprocal axis, whereby a combustion chamber is at least partially delimited by the cylinder and the piston. The piston comprises a piston crown adapted to face the combustion chamber, the piston crown comprising a piston bowl surface, recessed in the piston and circumferentially extending around a piston bowl centre axis adapted to extend in a direction parallel to the reciprocal axis. The piston also extends in a radial direction being perpendicular to the extension of the piston bowl centre axis.

The piston bowl surface defines a piston bowl that, following the circumference of the piston bowl surface around the piston bowl centre axis in a plane perpendicular to the piston bowl centre axis, comprises a set of circumferentially spaced apart dividing protrusions and a set of circumferentially spaced apart colliding protrusions wherein each two dividing protrusions in the set of circumferentially spaced apart dividing protrusions is separated by at least one colliding protrusion of the set of circumferentially spaced apart colliding protrusions.

Each dividing protrusion in the set of circumferentially spaced apart dividing protrusions is adapted to receive fuel from a fuel injector of the internal combustion engine. The piston crown further comprises a piston rim portion, wherein the piston rim portion encloses the piston bowl surface wherein a piston bowl opening is formed in an intersection between the piston rim portion and the piston bowl surface. The piston bowl surface has a piston bowl depth being a maximum distance from the piston rim portion to a portion of the piston bowl surface in a direction parallel to the piston bowl centre axis.

Purely by way of example, each colliding protrusions of the circumferentially spaced apart colliding protrusions may be adapted to receive portions of fuel which have been divided by adjacent dividing protrusions and transported from the adjacent dividing protrusions via the piston bowl surface.

The piston bowl has a piston bowl reference radius being a radius of a reference circle having the same area as an area, in the plane perpendicular to the piston bowl centre axis, radially outwardly enclosed by the piston bowl surface at a position along the piston bowl centre axis being located at half the piston bowl depth into the piston bowl. The piston crown has a piston crown radius, being a largest distance from the piston bowl centre axis to a portion of the piston crown in the plane perpendicular to the piston bowl centre axis. A ratio between the piston bowl reference radius and the piston crown radius being in the range of 0.8 to 0.4, preferably in the range of 0.7 to 0.5.

The first aspect of the disclosure may seek to enable an early interaction between fuel injected from a fuel injector and a portion of the piston bowl surface, such as a dividing protrusion thereof. Such an early interaction may in turn imply an appropriate dispersion of the fuel and/or an appropriate mix of air and fuel. Here, it should be noted that a ratio within any one of the ranges indicated above implies that the piston bowl is relatively small, at least in a radial direction, which in turn implies a short distance between a fuel injector and the piston bowl surface. A technical benefit may include an improved combustion in a combustion chamber at least partially delimited by a piston comprising the features presented above.

Optionally in some examples, including in at least one preferred example, at least one, preferably each one, of the colliding protrusion in the set of circumferentially spaced apart colliding protrusions, at a position along the piston bowl centre axis being located at half the piston bowl depth into the piston bowl, has a colliding protrusion portion being the portion of the colliding protrusion located closest to the piston bowl centre axis in the radial direction, the colliding protrusion portion being located at a colliding protrusion portion radial distance from the piston bowl centre axis, a ratio between the colliding protrusion portion radial distance and the piston bowl reference radius being in the range of 0.9 - 0.6, preferably in the range of 0.9 - 0.7. A technical benefit may include an appropriate dispersion of the fuel and/or an appropriate mix of air and fuel due to the relatively large colliding protrusion.

Optionally in some examples, including in at least one preferred example, at least one, preferably each one, of the dividing protrusion in the set of circumferentially spaced apart dividing protrusions, at a position along the piston bowl centre axis being located at half the piston bowl depth into the piston bowl, has a dividing protrusion portion being the portion of the dividing protrusion located closest to the piston bowl centre axis in the radial direction, the dividing protrusion portion being located at a dividing protrusion portion radial distance from the piston bowl centre axis, a ratio between the dividing protrusion portion radial distance and the piston bowl reference radius being in the range of 0.9 - 0.6, preferably in the range of 0.9 - 0.7. A technical benefit may include early interaction between fuel injected from a fuel injector and the dividing protrusion portion due to the relatively short distance therebetween.

Optionally in some examples, including in at least one preferred example, the piston bowl has a piston bowl maximum radius being the largest radial distance, in the plane perpendicular to the piston bowl centre axis, between the piston bowl centre axis and the piston bowl surface at a position along the piston bowl centre axis being located at half the piston bowl depth into the piston bowl, a ratio between the piston bowl reference radius and the piston bowl maximum radius being less than 0.8, preferably less than 0.7, more preferred less than 0.6. A technical benefit may include an appropriate amount of interactions between the fuel and the piston bowl surface since the colliding and/or dividing protrusions will occupy a relatively large part of the piston bowl volume.

Optionally in some examples, including in at least one preferred example, the piston bowl has a piston bowl maximum radius being the largest radial distance, in the plane perpendicular to the piston bowl centre axis, between the piston bowl centre axis and the piston bowl surface at a position along the piston bowl centre axis being located at half the piston bowl depth into the piston bowl, the piston bowl having a piston bowl reference circumference being the circumference of a circle having the piston bowl maximum radius, the piston bowl having a piston bowl circumference, in the plane perpendicular to the piston bowl centre axis, of the piston bowl surface at a position along the piston bowl centre axis being located at half the piston bowl depth into the piston bowl, a ratio between the piston bowl circumference and the piston bowl reference circumference being greater than 1.1, preferably greater than 1.2. A technical benefit may include an appropriate amount of interactions between the fuel and the piston bowl surface since the colliding and/or dividing protrusions will occupy a relatively large part of the piston bowl volume.

Optionally in some examples, including in at least one preferred example, a ratio between the piston bowl depth and the piston bowl reference radius is at least 0.2, preferably at least 0.4. A technical benefit may include an appropriate compression rate when the piston is used in an internal combustion engine. This is since a relatively deep piston bowl may be associated with a lower compression ratio as compared to a shallower piston bowl.

Optionally in some examples, including in at least one preferred example, the set of circumferentially spaced apart dividing protrusions contains 1-6, preferably 2-6, more preferred 4, dividing protrusions. A technical benefit may include that a momentum in fuel injected from a fuel injector to a dividing protrusion may be appropriately high since a low number of dividing protrusions implies a low number of individual gas jets injected from the fuel injector.

According to a second aspect of the disclosure, there is provided an internal combustion engine for gaseous fuel, the internal combustion engine comprising a cylinder and a piston according to the first aspect of the present disclosure, the internal combustion engine further comprising a fuel injector adapted to inject gaseous fuel into the combustion chamber such that an individual gas jet is directed towards each dividing protrusion of the set of circumferentially spaced apart dividing protrusions.

As for the first aspect, the second aspect of the disclosure may seek to enable an early interaction between fuel injected from a fuel injector and a portion of the piston bowl surface, such as a dividing protrusion thereof. Such an early interaction may in turn imply an appropriate dispersion of the fuel and/or an appropriate mix of air and fuel. Here, it should be noted that a ratio within any one of the ranges indicated above implies that the piston bowl is relatively small, at least in the radial direction, which in turn implies a short distance between a fuel injector and the piston bowl surface. A technical benefit may include an improved combustion in a combustion chamber at least partially delimited by a piston having the features presented above.

Optionally in some examples, including in at least one preferred example, the fuel injector injects gas into the combustion chamber such that each individual gas jet forms an angle being equal to or greater than 65°, preferably equal to or greater than 70°, with the piston bowl centre axis. A technical benefit may include an appropriate interaction between each individual gas jet and the piston bowl surface, for instance in terms of at which position along in a direction parallel to the piston bowl centre axis that the individual gas jet impacts the piston bowl surface.

Optionally in some examples, including in at least one preferred example, the fuel injector contains a set of fuel injector openings, the set of fuel injector openings containing 1-6, preferably 2-6, more preferred 4, fuel injector openings, each fuel injector opening in the set of fuel injector openings being adapted to inject an individual gas jet into the combustion chamber, the set of circumferentially spaced apart dividing protrusions containing a number of dividing protrusions being equal to the number of fuel injector openings in the set of fuel injector openings. A technical benefit may include that a momentum in fuel injected from a fuel injector to a dividing protrusion may be appropriately high since a low number of individual gas jets injected from the fuel injector implies that each individual gas jet may be associated with an appropriately high momentum.

Optionally in some examples, including in at least one preferred example, the internal combustion engine further comprises a cylinder head with a cylinder head surface facing the piston crown and at least partially delimiting the combustion chamber, the piston being adapted to move reciprocally in the cylinder of the internal combustion engine along the reciprocal axis between a top dead centre and a bottom dead centre, the internal combustion engine being such that when the piston is in the top dead centre, a smallest distance along the reciprocal axis between the piston crown and the cylinder head is at least 2 mm, preferably at least 3 mm. A technical benefit may include that the internal combustion engine can operate with an appropriate compression ratio. Here, it should be noted that for instance the piston with the piston bowl as presented above may imply that relatively high compression ratio and such a high compression ratio may be reduced by virtue of the above-mentioned smallest distance being equal to or above any one of the limits presented hereinabove.

Optionally in some examples, including in at least one preferred example, the fuel injector is adapted to discharge gaseous fuel at a mean fuel injector exit velocity being equal to or exceeding 800 m/s, preferably equal to or exceeding 1200 m/s, more preferred equal to or exceeding 1600 m/s. A technical benefit may include an appropriately high momentum of the discharged gaseous fuel.

Optionally in some examples, including in at least one preferred example, the fuel injector is adapted to discharge gaseous fuel at a discharge pressure being within the range of 150-500 bar, preferably in the range of 200-300 bar when the internal combustion engine is operating at medium load alternatively in the range of 300-400 bar when the internal combustion engine is operating at high load. A technical benefit may include an appropriately high momentum of the discharged gaseous fuel.

Optionally in some examples, including in at least one preferred example, the fuel injector is adapted to inject hydrogen fuel into the combustion chamber, preferably the internal combustion engine comprises a source of hydrogen fuel adapted to be in selective fluid communication with the fuel injector. A technical benefit may include a combustion with an appropriately low production of adverse emissions.

According to a third aspect of the disclosure, there is provided a vehicle comprising the piston of the first aspect of the present disclosure or an internal combustion engine of the second aspect of the present disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**Fig. 1** is a schematic view of a vehicle;
**Fig. 2** is a schematic side view of a portion of an example of an internal combustion engine in accordance with the present disclosure;
**Fig. 3** is a perspective view of a piston according to an example of the present disclosure;
**Fig. 4** is a cross-sectional side view of a piston according to an example of the present disclosure;
**Fig. 5** is a top view of a piston according to an example of the present disclosure;
**Fig. 6** is a top view of a piston according to an example of the present disclosure;
**Fig. 7** is a schematic top view of an internal combustion engine according to an example of the present disclosure, and
**Fig. 8** is a schematic side view of an internal combustion engine according to an example of the present disclosure.

### DETAILED DESCRIPTION

The detailed description set forth below provides information and examples of the disclosed technology with sufficient detail to enable those skilled in the art to practice the disclosure.

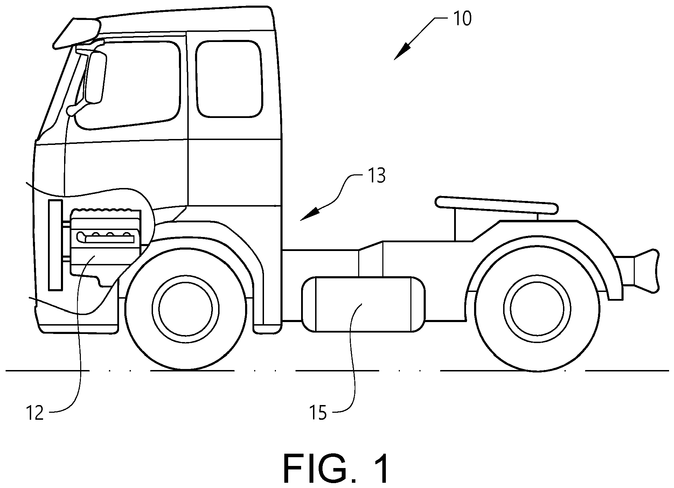

**Fig. 1** illustrates a vehicle, for example a truck 10, comprising an internal combustion engine 12 for gaseous fuel. Purely by way of example, the vehicle 10 may comprise a drive arrangement 13 comprising an internal combustion engine 12 and a hydrogen fuel supply system 15 for supplying hydrogen fuel to the fuel injector. Preferably, and as indicated in **Fig. 1****,** the hydrogen fuel supply system 15 may comprise a tank for storing hydrogen fuel.

For the sake of completeness, it should be noted that the internal combustion engine 12 and/or the drive arrangement 13 according to the present invention may be used in other applications than a vehicle 10.

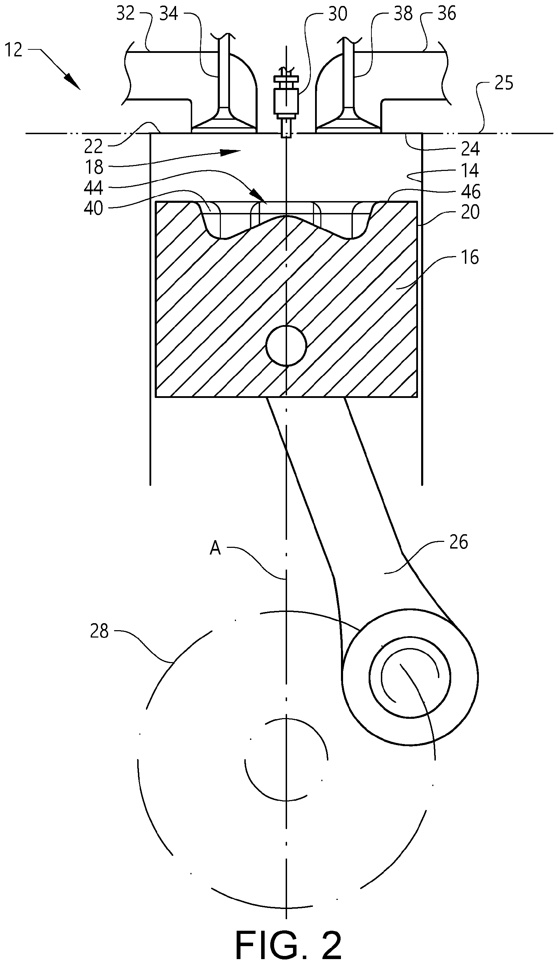

**Fig. 2** illustrates a cross-sectional view of a portion of an internal combustion engine 12 in accordance with an example of the present disclosure. As indicated in **Fig. 2****,** the internal combustion engine 12 comprises a cylinder 14 and a piston 16 for reciprocal movement in the cylinder along a reciprocal axis A, whereby a combustion chamber 18 is at least partially delimited by the cylinder 14 and the piston 16. The piston 16 comprises a piston crown 20 facing the combustion chamber 18. Purely by way of example, and as indicated in **Fig. 2****,** the internal combustion engine 12 may further comprise a cylinder head 22 with a cylinder head surface 24 facing the piston crown 20 and at least partially delimiting the combustion chamber. Further possible examples of the cylinder head 22 will be elaborated on hereinbelow. As indicated in **Fig. 2****,** the cylinder head surface 24 may extend in a cylinder head surface plane 25.

As illustrated in **Fig. 2****,** though purely by way of example, the piston 16 may be mechanically connected, for instance via a connecting rod 26 as exemplified in **Fig. 2****,** to a crankshaft 28 of the engine 12, whereby the piston 16 is movable in the cylinder 14 between a top and a bottom dead centre position, respectively.

Moreover, as may be gleaned from **Fig. 2****,** the internal combustion engine 12 further comprises a fuel injector 30 for injecting gaseous fuel into the combustion chamber 18. Purely by way of example, and as indicated in **Fig. 2****,** the fuel injector 30 may be at least partially arranged in the cylinder head 22. It should be noted that **Fig. 2** merely presents an example of a fuel injector 30 and that it is envisaged that examples of the internal combustion engine 12 may comprise a fuel injector 30 that is positioned and/or oriented in a manner being different from what is exemplified in **Fig. 2****.**

Moreover, as exemplified in **Fig. 2****,** the internal combustion engine 12 may comprise one or more inlet ports 32 with corresponding inlet valves 34. Purely by way of example, and as indicated in **Fig. 2****,** the inlet valve or valves 34 may be at least partially arranged in the cylinder head 22. In a similar vein, again as exemplified in **Fig. 2****,** the internal combustion engine 12 may comprise one or more exhaust ports 36 with corresponding exhaust valves 38. Purely by way of example, and as indicated in **Fig. 2****,** the exhaust valve or valves 38 may be at least partially arranged in the cylinder head 22.

Furthermore, as indicated in **Fig. 2****,** the piston crown 20 comprises a piston bowl surface 40 defining a piston bowl 44. According to the present disclosure, the piston bowl 44 may be such that an appropriate interaction between the gaseous fuel and the piston bowl 44, such as an appropriate interaction between the gaseous fuel and the piston bowl surface 40, is obtained in order to arrive at an appropriate combustion in the combustion chamber 18. Details of the piston bowl surface 40 and the piston bowl 44 will be presented hereinbelow.

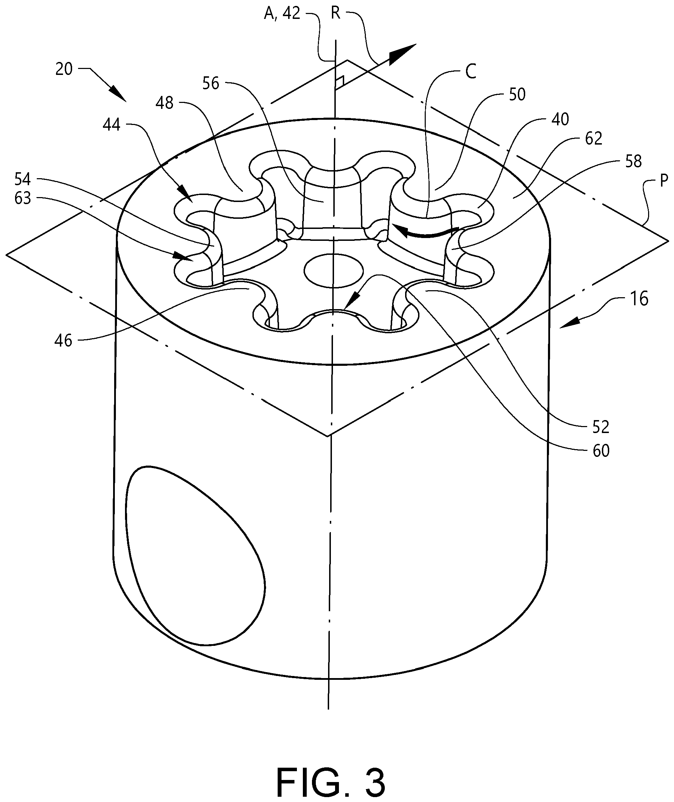

To this end, reference is made to **Fig. 3** illustrating an example of a piston 16 for an internal combustion engine comprising a cylinder (not shown in **Fig. 3**). The piston 16 is adapted to move reciprocally in the cylinder of the internal combustion engine along a reciprocal axis A, see **Fig. 2****.** As indicated above, with reference to **Fig. 2****,** a combustion chamber 18 is at least partially delimited by the cylinder 14 and the piston 16. The piston comprises a piston crown 20 adapted to face the combustion chamber. The piston crown comprises a piston bowl surface 40, recessed in the piston 16 and circumferentially extending around a piston bowl centre axis 42 adapted to extend in a direction parallel to the reciprocal axis A, see **Fig. 2****.** Moreover, as indicated in **Fig. 3****,** the piston 16 also extends in a radial direction R being perpendicular to the extension of the piston bowl centre axis 42.

As indicated in **Fig. 3****,** the piston bowl surface 40 defines a piston bowl 44 that, following the circumference of the piston bowl surface 40 around the piston bowl centre axis 42 in a plane P perpendicular to the piston bowl centre axis 42, comprises a set of circumferentially spaced apart dividing protrusions 46, 48, 50, 52 and a set of circumferentially spaced apart colliding protrusions 54, 56, 58, 60. A portion of the circumference of the of the piston bowl surface 40 around the piston bowl centre axis 42 in a plane P perpendicular to the piston bowl centre axis 42 is indicated by the arrow C in **Fig. 3****.** Each two dividing protrusions 46, 48 in the set of circumferentially spaced apart dividing protrusions is separated by at least one colliding protrusion 54 of the set of circumferentially spaced apart colliding protrusions. Put differently, as seen in a circumferential direction around the piston bowl centre axis 42, the dividing protrusions 44, 46, 48, 50 and the colliding protrusions 52, 54, 56, 58 appear in an alternating order. As a non-limiting example, the set of circumferentially spaced apart dividing protrusions 46, 48, 50, 52 may contain one to six, preferably two to six, dividing protrusions. In the **Fig. 3** example, the set of circumferentially spaced apart dividing protrusions 46, 48, 50, 52 contains four dividing protrusions.
Each dividing protrusion 46, 48, 50, 52 in the set of circumferentially spaced apart dividing protrusions is adapted to receive fuel from a fuel injector 30 (see **Fig. 2**) of the internal combustion engine 12 (see **Fig. 2**). The piston crown 20 further comprises a piston rim portion 62. The piston rim portion 62 encloses the piston bowl surface 40 wherein a piston bowl opening 63 is formed in an intersection between the piston rim portion 62 and the piston bowl surface 40. Purely by way of example, the piston rim portion 62 may extend in a plane being perpendicular to the piston bowl centre axis 42.

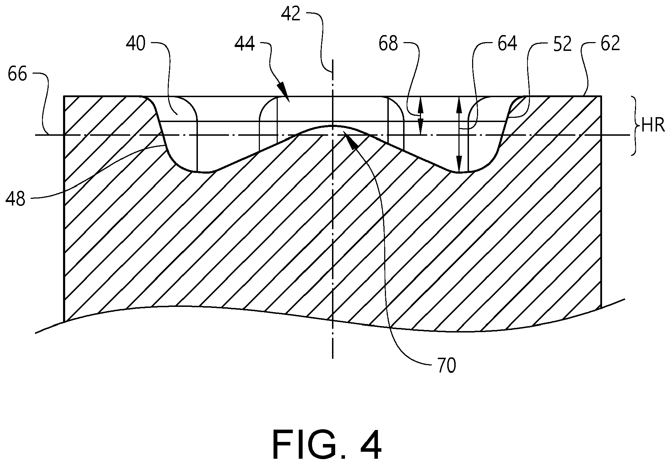

As may be gleaned from **Fig. 4****,** the piston bowl surface 40 has a piston bowl depth 64 being a maximum distance from the piston rim portion 62 to a portion of the piston bowl surface 40 in a direction parallel to the piston bowl centre axis 42. **Fig. 4** also illustrates a plane 66 perpendicular to the piston bowl centre axis 42 located at half the piston bowl depth 64 into the piston bowl 44. The distance half the piston bowl depth 64 is indicated by reference numeral 68 in **Fig. 4****.** Purely by way of example, the example of the piston bowl 44 illustrated in **Fig. 4** comprises a bottom portion 70 sloping downward from the piston bowl centre axis 42. As a non-limiting example, the central bottom portion 70 may be shaped as cone.

Purely by way of example, and as indicated in **Fig. 4****,** the piston bowl surface 40 may define a piston bowl 44 that is in accordance with the following for every level along the piston bowl centre axis 42 within a range HR of at least 60%, preferably at least 70%, of the piston bowl depth 64: following the circumference of the piston bowl surface 40 around the piston bowl centre axis 42 in a plane P perpendicular to the piston bowl centre axis 42, the piston bowl 44 comprises a set of circumferentially spaced apart dividing protrusions 46, 48, 50, 52 and a set of circumferentially spaced apart colliding protrusions 54, 56, 58, 60. In the **Fig. 4** example, an end point of the range HR is located at the piston rim portion 62 and the range HR extends into the piston bowl 44 (downwards in **Fig. 4**) along the piston bowl centre axis 42. However, it is also envisaged that in other examples of the piston 16, an end point of the range HR may be located at the portion of the piston bowl 44 associated with the piston bowl depth 64 and extend towards the piston rim portion 62 (upwards in **Fig. 4**) along the piston bowl centre axis 42. It is also envisaged that the range HR may extend between two different elevations along the piston bowl centre axis 42, each one of the elevations being located at a distance from each one of the piston rim portion 62 and the portion of the piston bowl 44 associated with the piston bowl depth 64.

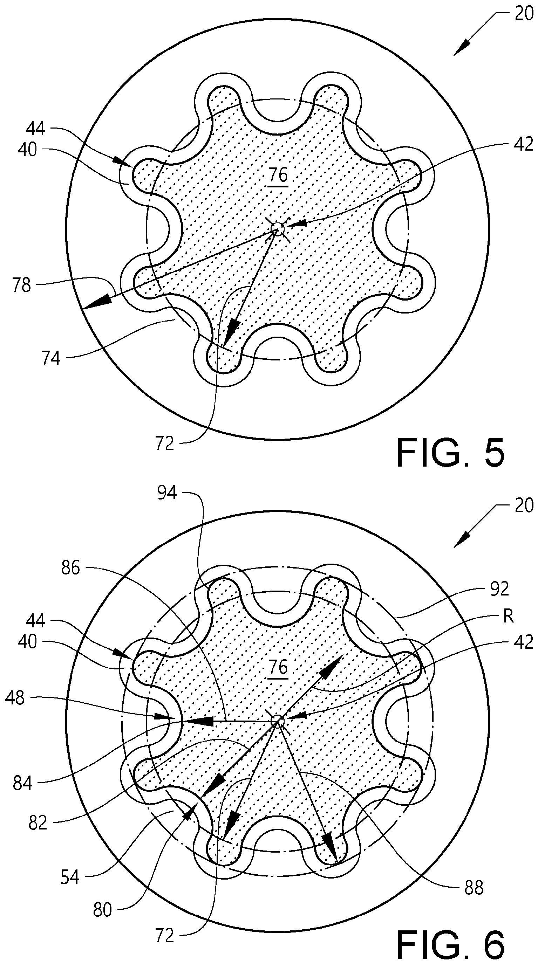

Turing to **Fig. 5****,** the piston bowl 44 has a piston bowl reference radius 72 being a radius of a reference circle 74 having the same area as an area 76, in the plane perpendicular to the piston bowl centre axis 42, radially outwardly enclosed by the piston bowl surface 40 at a position along the piston bowl centre axis 42 being located at half the piston bowl depth 68 (see **Fig. 4**) into the piston bowl 44. As may be realized from the above and possibly also from **Fig. 5****,** the area 76 radially outwardly enclosed by the piston bowl surface 40 may be determined by, for each angular displacement around the piston bowl centre axis 42, determining the largest radial distance from the piston bowl centre axis 42 to the piston bowl surface 40 in order to determine a piston bowl circumference 94 (see **Fig. 6** below) and determining the area enclosed by the piston bowl circumference 94. As such, any possible interior portions of the piston bowl surface 40, such as for instance the central bottom portion 70 exemplified in **Fig. 4****,** will not affect the area 76 radially outwardly enclosed by the piston bowl surface 40.

Moreover, as indicated in **Fig. 5****,** the piston crown 20 has a piston crown radius 78, being a largest distance from the piston bowl centre axis 42 to a portion of the piston crown 20 in the plane perpendicular to the piston bowl centre axis 42. A ratio between the piston bowl reference radius 72 and the piston crown radius 78 is in the range of 0.8 to 0.4, preferably in the range of 0.7 to 0.5. As such, the area defined by the piston bowl surface 40 at half the piston bowl depth 68 is relatively small which implies that the fuel injected from the fuel injector (see **Fig. 2**) may impact the piston bowl surface 40 relatively quickly, which in turn implies an appropriately high fuel dispersion and/or fuel and air mixing which may result in an appropriately efficient combustion of the fuel.

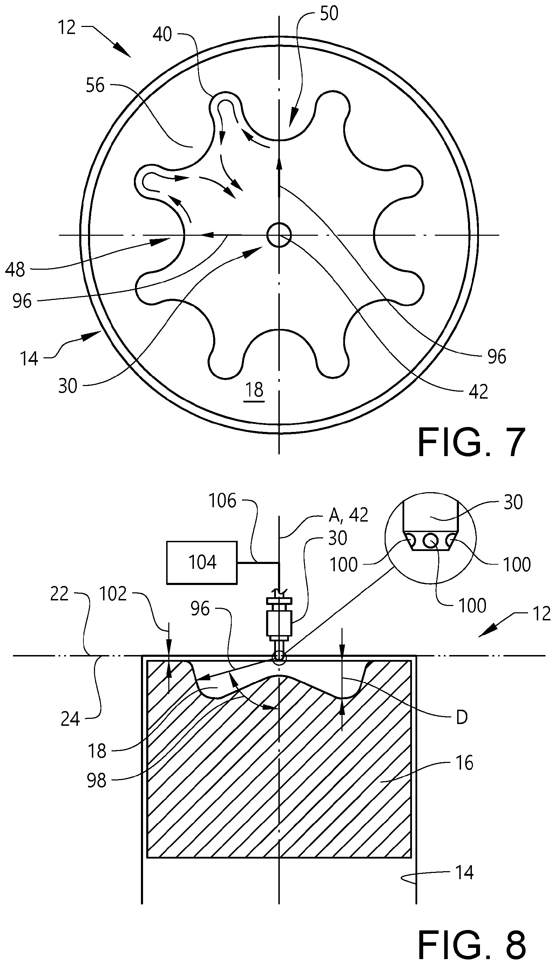

**Fig. 6** illustrates an example in which at least one, preferably each one, of the colliding protrusion 54 in the set of circumferentially spaced apart colliding protrusions, at a position along the piston bowl centre axis 42 being located at half the piston bowl depth 68 (see **Fig. 4**) into the piston bowl 44, has a colliding protrusion portion 80 being the portion of the colliding protrusion 48 located closest to the piston bowl centre axis 42 in the radial direction R. The colliding protrusion portion 80 is located at a colliding protrusion portion radial distance 82 from the piston bowl centre axis 42. A ratio between the colliding protrusion portion radial distance 82 and the piston bowl reference radius 72 is in the range of 0.9 - 0.6, preferably in the range of 0.9 - 0.7. A ratio within any one of the above ranges implies an appropriate dispersion of the fuel and/or an appropriate mix of air and fuel due to the relatively large colliding protrusion 54, see e.g. **Fig. 7** below.

**Fig. 6** also illustrates, by way of example only, that at least one, preferably each one, of the dividing protrusion 48 in the set of circumferentially spaced apart dividing protrusions, at a position along the piston bowl centre axis being located at half the piston bowl depth 68 (see **Fig. 4**) into the piston bowl 44, has a dividing protrusion portion 84 being the portion of the dividing protrusion 56 located closest to the piston bowl centre axis 42 in the radial direction R. The dividing protrusion portion 84 is located at a dividing protrusion portion radial distance 86 from the piston bowl centre axis 42. A ratio between the dividing protrusion portion radial distance 86 and the piston bowl reference radius 72 being in the range of 0.9 - 0.6, preferably in the range of 0.9 - 0.7. As such, the distance between the dividing protrusion portion 84 and a fuel injector 30 (see **Fig. 2**) may be relatively small which implies that the fuel may be appropriately mixed.

As also illustrated by way of example in **Fig. 6****,** the piston bowl may have a piston bowl maximum radius 88 being the largest radial distance, in the plane perpendicular to the piston bowl centre axis 42, between the piston bowl centre axis 42 and the piston bowl surface 40 at a position along the piston bowl centre axis 42 being located at half the piston bowl depth 68 (see **Fig. 4**) into the piston bowl 44. A ratio between the piston bowl reference radius 72 and the piston bowl maximum radius 88 is less than 0.8, preferably less than 0.7, more preferred less than 0.6.

Again, though purely by way of example, the piston bowl 44 may have a piston bowl maximum radius 88 being the largest radial distance, in the plane perpendicular to the piston bowl centre axis 42, between the piston bowl centre axis 42 and the piston bowl surface 40 at a position along the piston bowl centre axis being located at half the piston bowl depth 68 (see **Fig. 4**) into the piston bowl 44. The piston bowl 44 has a piston bowl reference circumference 92 being the circumference of a circle having the piston bowl maximum radius 88. Moreover, as indicated in **Fig. 6** the piston bowl 44 has a piston bowl circumference 94, in the plane perpendicular to the piston bowl centre axis 44, of the piston bowl surface 40 at a position along the piston bowl centre axis being located at half the piston bowl depth 68 (see **Fig. 4**) into the piston bowl 44. A ratio between the piston bowl circumference 94 and the piston bowl reference circumference 92 is greater than 1.1, preferably greater than 1.2. As an example, and as indicated in **Fig. 6****,** the piston bowl surface 40, at the position along the piston bowl centre axis being located at half the piston bowl depth 68, may follow an oscillating path resulting in that the piston bowl circumference is greater than the piston bowl reference circumference 92.

Purely by way of example and with references to **Fig. 4** as well as to **Fig. 6****,** a ratio between the piston bowl depth 64 and the piston bowl reference radius 72 is at least 0.2, preferably at least 0.4. As such, the piston bowl 44 may be regarded as relatively deep.

**Fig. 7** and **Fig. 8****,** respectively, schematically illustrate an example of an internal combustion engine 12 for gaseous fuel according to a second aspect of the present disclosure. To this end, **Fig. 7** illustrates a schematic top view and **Fig. 8** illustrates a schematic side view of the internal combustion engine 12. As may be gleaned from each one of **Fig. 7** and **Fig. 8****,** the internal combustion engine 12 comprises a cylinder 14 and a piston 16 according to the first aspect of the present disclosure, for instance a piston 16 according to any one of the examples presented hereinabove. Moreover, the internal combustion engine 12 further comprises a fuel injector 30 adapted to inject gaseous fuel into the combustion chamber 18 such that an individual gas jet 96 is directed towards each dividing protrusion 48, 50 of the set of circumferentially spaced apart dividing protrusions. As indicated above with reference to **Fig. 2****,** the combustion chamber 18 is at least partially delimited by the cylinder 14 and the piston 16.

As may be realized from e.g. **Fig. 7****,** gas from an individual gas jet 96 impacting a dividing protrusion, e.g. the dividing protrusion 48 in **Fig. 7****,** may be divided thereby and a gas portion may thereafter follow the piston bowl surface 40 in a circumferential direction until reaching an adjacent colliding protrusion 56 at which the gas portion collides with another gas portion divided by another dividing protrusion, e.g. the dividing protrusion 50 in **Fig. 7****,** and the colliding gas portions may thereafter propagate towards the piston bowl centre axis 42.

Moreover, though purely by way of example, as indicated in **Fig. 8****,** the fuel injector may be adapted to inject gas into the combustion chamber 18 such that each individual gas jet 96 forms an angle 98 of being equal to or greater than 65°, preferably equal to or greater than 70°, with the piston bowl centre axis 42.

Furthermore as again illustrated by way of example only in **Fig. 8****,** the fuel injector 30 contains a set of fuel injector openings. The set of fuel injector openings contains 1-6, preferably 2-6, more preferred 4, fuel injector openings 100. Each fuel injector opening 100 in the set of fuel injector openings is adapted to inject an individual gas jet into the combustion chamber 18. Purely by way of example, the set of circumferentially spaced apart dividing protrusions contains a number of dividing protrusions being equal to the number of fuel injector openings in the set of fuel injector openings.

By way of example only, and as exemplified in **Fig. 8****,** the internal combustion engine 12 may further comprise a cylinder head 22 with a cylinder head surface 24 facing the piston crown 20 and at least partially delimiting the combustion chamber. The piston 16 is adapted to move reciprocally in the cylinder 14 of the internal combustion engine 12 along the reciprocal axis between a top dead centre and a bottom dead centre, see e.g. **Fig. 2****.** **Fig. 8** illustrates the piston 16 at the top dead centre. As indicated in **Fig. 8****,** the internal combustion engine 12 is such that when the piston 16 is in the top dead centre, a smallest distance 102 along the reciprocal axis A between the piston crown 20 and the cylinder head is at least 2 mm, preferably at least 3 mm. Here, it should be noted that for other examples, the smallest distance may be around 1 mm. However, a smallest distance being at least 2 mm, preferably at least 3 mm implies an appropriate compression ratio, e.g. an appropriately low compression ratio.

By way of example only, the fuel injector 30 may be adapted to discharge gaseous fuel at a mean fuel injector exit velocity being equal to or exceeding 800 m/s, preferably equal to or exceeding 1200 m/s, more preferred equal to or exceeding 1600 m/s.

Moreover, as a non-limiting example, the fuel injector 30 may be adapted to discharge gaseous fuel at a discharge pressure being within the range of 150-500 bar, preferably in the range of 200-300 bar when the internal combustion engine is operating at medium load alternatively in the range of 300-400 bar when the internal combustion engine is operating at high load.

Furthermore, as indicated in **Fig. 8****,** the fuel injector 30 may be adapted to inject hydrogen fuel into the combustion chamber. Preferably, and as exemplified in **Fig. 8****,** the internal combustion engine 12 may comprises a source 104 of hydrogen fuel adapted to be in selective fluid communication with the fuel injector 30. Purely by way of example, the source 104 of hydrogen fuel may comprise or even be constituted by a tank. Furthermore, by way of example only, the source 104 of hydrogen fuel may be connected to the fuel injector 30 by means of a fuel guiding assembly 106 which for instance may comprise one or more conduits.

The present disclosure may be presented in accordance with any one of the below examples.

Example 1. A piston (16) for an internal combustion engine (12) comprising a cylinder (14), said piston (16) being adapted to move reciprocally in said cylinder (14) of said internal combustion engine (12) along a reciprocal axis (A), whereby a combustion chamber (18) is at least partially delimited by said cylinder (14) and said piston (16),
said piston (16) comprising a piston crown (20) adapted to face said combustion chamber (18), said piston crown (20) comprising a piston bowl surface (40), recessed in said piston (16) and circumferentially extending around a piston bowl centre axis (42) adapted to extend in a direction parallel to the reciprocal axis (A), said piston (16) also extending in a radial direction (R) being perpendicular to the extension of said piston bowl centre axis (42),
said piston bowl surface (40) defining a piston bowl (44) that, following the circumference of said piston bowl surface (40) around said piston bowl centre axis (42) in a plane perpendicular to said piston bowl centre axis (42), comprises a set of circumferentially spaced apart dividing protrusions (46, 48, 50, 52) and a set of circumferentially spaced apart colliding protrusions (54, 56, 58, 60) wherein each two dividing protrusions (46, 48, 50, 52) in said set of circumferentially spaced apart dividing protrusions (46, 48, 50, 52) is separated by at least one colliding protrusion (54, 56, 58, 60) of said set of circumferentially spaced apart colliding protrusions (54, 56, 58, 60), each dividing protrusion (46, 48, 50, 52) in said set of circumferentially spaced apart dividing protrusions being adapted to receive fuel from a fuel injector (30) of said internal combustion engine (12),
said piston crown (20) further comprising a piston rim portion (62), wherein said piston rim portion (62) encloses said piston bowl surface (40) wherein a piston bowl opening (63) is formed in an intersection between said piston rim portion (62) and said piston bowl surface (40),
said piston bowl surface (40) having a piston bowl depth (64) being a maximum distance from said piston rim portion (62) to a portion of said piston bowl surface (40) in a direction parallel to said piston bowl centre axis (42),
said piston bowl (44) having a piston bowl reference radius (72) being a radius of a reference circle having the same area as an area, in the plane perpendicular to said piston bowl centre axis (42), radially outwardly enclosed by said piston bowl surface (40) at a position along said piston bowl centre axis (42) being located at half the piston bowl depth (68) into said piston bowl (44),
said piston crown (20) having a piston crown radius (78), being a largest distance from said piston bowl centre axis (42) to a portion of said piston crown (20) in said plane perpendicular to said piston bowl centre axis (42),
a ratio between said piston bowl reference radius (72) and said piston crown radius (78) being in the range of 0.8 to 0.4, preferably in the range of 0.7 to 0.5.

Example 2. The piston (16) of Example 1, wherein the ratio between said piston bowl reference radius (72) and said piston crown radius (78) being in the range of 0.7 to 0.5.

Example 3. The piston (16) of Example 1 or Example 2, wherein at least one, preferably each one, of said colliding protrusion in said set of circumferentially spaced apart colliding protrusions (54, 56, 58, 60), at a position along said piston bowl centre axis (42) being located at half the piston bowl depth (68) into said piston bowl (44), has a colliding protrusion portion (80) being the portion of the colliding protrusion located closest to said piston bowl centre axis (42) in the radial direction (R), said colliding protrusion portion (80) being located at a colliding protrusion portion radial distance (82) from said piston bowl centre axis (42), a ratio between said colliding protrusion portion radial distance (82) and said piston bowl reference radius (72) being in the range of 0.9 - 0.6, preferably in the range of 0.9-0.7.

Example 4. The piston (16) of Example 3, wherein the ratio between said colliding protrusion portion radial distance (82) and said piston bowl reference radius (72) being in the range of 0.9 - 0.7.

Example 5. The piston (16) of any one of Examples 1 to 4, wherein at least one, preferably each one, of said dividing protrusion in said set of circumferentially spaced apart dividing protrusions (46, 48, 50, 52), at a position along said piston bowl centre axis (42) being located at half the piston bowl depth (68) into said piston bowl (44), has a dividing protrusion portion (84) being the portion of the dividing protrusion located closest to said piston bowl centre axis (42) in the radial direction (R), said dividing protrusion portion (84) being located at a dividing protrusion portion radial distance (86) from said piston bowl centre axis (42), a ratio between said dividing protrusion portion radial distance (86) and said piston bowl reference radius (72) being in the range of 0.9 - 0.6, preferably in the range of 0.9-0.7.

Example 6. The piston (16) of any one of Examples 1 to 4, wherein the ratio between said dividing protrusion portion radial distance (86) and said piston bowl reference radius (72) being in the range of 0.9 - 0.7.

Example 7. The piston (16) of any one of the preceding Examples, wherein said piston bowl (44) has a piston bowl maximum radius (88) being the largest radial distance, in the plane perpendicular to said piston bowl centre axis (42), between said piston bowl centre axis (42) and said piston bowl surface (40) at a position along said piston bowl centre axis (42) being located at half the piston bowl depth (68) into said piston bowl (44), a ratio between said piston bowl reference radius (72) and said piston bowl maximum radius (88) being less than 0.8.

Example 8. The piston (16) of Example 7, wherein the ratio between said piston bowl reference radius (72) and said piston bowl maximum radius (88) is less than 0.7.

Example 9. The piston (16) of Example 8, wherein the ratio between said piston bowl reference radius (72) and said piston bowl maximum radius (88) is less than 0.6.

Example 10. The piston (16) of any one of the preceding Examples, wherein said piston bowl (44) has a piston bowl maximum radius (88) being the largest radial distance, in the plane perpendicular to said piston bowl centre axis (42), between said piston bowl centre axis (42) and said piston bowl surface (40) at a position along said piston bowl centre axis (42) being located at half the piston bowl depth (68) into said piston bowl (44), said piston bowl (44) having a piston bowl reference circumference (92) being the circumference of a circle having said piston bowl maximum radius (88), said piston bowl (44) having a piston bowl circumference (94), in the plane perpendicular to said piston bowl centre axis (42), of said piston bowl surface (40) at a position along said piston bowl centre axis (42) being located at half the piston bowl depth (68) into said piston bowl (44), a ratio between said piston bowl circumference (94) and said piston bowl reference circumference (92) being greater than 1.1.

Example 11. The piston (16) of Example 10, wherein the ratio between said piston bowl circumference (94) and said piston bowl reference circumference (92) is greater than 1.2.

Example 12. The piston (16) of any one of the preceding Examples, wherein a ratio between said piston bowl depth (64) and said piston bowl reference radius (72) is at least 0.2, preferably at least 0.4.

Example 13. The piston (16) of any one of the preceding Examples, wherein said set of circumferentially spaced apart dividing protrusions (46, 48, 50, 52) contains 1-6, preferably 2-6, more preferred 4 dividing protrusions (46, 48, 50, 52).

Example 14. The piston (16) of Example 13, wherein said set of circumferentially spaced apart dividing protrusions (46, 48, 50, 52) contains 4 dividing protrusions (46, 48, 50, 52).

Example 15. An internal combustion engine (12) for gaseous fuel, said internal combustion engine (12) comprising a cylinder (14) and a piston (16) according to any one of the preceding Examples, said internal combustion engine (12) further comprising a fuel injector (30) adapted to inject gaseous fuel into said combustion chamber (18) such that an individual gas jet is directed towards each dividing protrusion of said set of circumferentially spaced apart dividing protrusions (46, 48, 50, 52).

Example 16. The internal combustion engine (12) of Example 15, wherein said fuel injector (30) injects gas into said combustion chamber (18) such that each individual gas jet forms an angle (98) being equal to or greater than 65° with said piston bowl centre axis (42).

Example 17. The internal combustion engine (12) of Example 16, wherein said fuel injector (30) injects gas into said combustion chamber (18) such that each individual gas jet forms an angle (98) being equal to or greater than 70° with said piston bowl centre axis (42).

Example 18. The internal combustion engine (12) of any one of Examples 15 to 17, wherein said fuel injector (30) contains a set of fuel injector openings, said set of fuel injector openings containing 1-6, preferably 2-6, more preferred 4, fuel injector openings (100), each fuel injector opening (100) in said set of fuel injector (30) openings being adapted to inject an individual gas jet into said combustion chamber (18), said set of circumferentially spaced apart dividing protrusions (46, 48, 50, 52) containing a number of dividing protrusions (46, 48, 50, 52) being equal to the number of fuel injector (30) openings in said set of fuel injector (30) openings.

Example 19. The internal combustion engine (12) of any one of Examples 15 to 18, further comprising a cylinder head (22) with a cylinder head surface (24) facing said piston crown (20) and at least partially delimiting said combustion chamber (18), said piston (16) being adapted to move reciprocally in said cylinder (14) of said internal combustion engine (12) along said reciprocal axis (A) between a top dead centre and a bottom dead centre, the internal combustion engine (12) being such that when said piston (16) is in said top dead centre, a smallest distance (102) along said reciprocal axis (A) between said piston crown (20) and said cylinder (14) head is at least 2 mm.

Example 20. The internal combustion engine (12) of Example 19, wherein the smallest distance (102) along said reciprocal axis (A) between said piston crown (20) and said cylinder (14) head is at least 3 mm.

Example 21. The internal combustion engine (12) of any one of Examples 15 to 20, wherein said fuel injector (30) is adapted to discharge gaseous fuel at a mean fuel injector exit velocity being equal to or exceeding 800 m/s.

Example 22. The internal combustion engine (12) of Example 21, wherein said fuel injector (30) is adapted to discharge gaseous fuel at a mean fuel injector exit velocity being equal to or exceeding 1200 m/s.

Example 23. The internal combustion engine (12) of Example 22, wherein said fuel injector (30) is adapted to discharge gaseous fuel at a mean fuel injector exit velocity being equal to or exceeding 1600 m/s.

Example 24. The internal combustion engine (12) of any one of Examples 15 to 23, wherein said fuel injector (30) is adapted to discharge gaseous fuel at a discharge pressure being within the range of 150-500 bar, preferably in the range of 200-300 bar when the internal combustion engine (12) is operating at medium load alternatively in the range of 300-400 bar when the internal combustion engine (12) is operating at high load.

Example 25. The internal combustion engine (12) of Example 24, wherein said fuel injector (30) is adapted to discharge gaseous fuel at a discharge pressure being within the range of 200-300 bar when the internal combustion engine (12) is operating at medium load.

Example 26. The internal combustion engine (12) of Examples 24, wherein said fuel injector (30) is adapted to discharge gaseous fuel at a discharge pressure being within the range of 300-400 bar when the internal combustion engine (12) is operating at high load.

Example 27. The internal combustion engine (12) of any one of Examples 15 to 26, wherein said fuel injector (30) is adapted to inject hydrogen fuel into said combustion chamber (18).

Example 28. The internal combustion engine (12) of Example 27, wherein said internal combustion engine (12) comprises a source (104) of hydrogen fuel adapted to be in selective fluid communication with said fuel injector (30).

Example 29. A vehicle (10) comprising the piston (16) of any one of Examples 1 - 14 or an internal combustion engine (12) according to any one of Examples 15 - 28.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A piston (16) for an internal combustion engine (12) comprising a cylinder (14), said piston (16) being adapted to move reciprocally in said cylinder (14) of said internal combustion engine (12) along a reciprocal axis (A), whereby a combustion chamber (18) is at least partially delimited by said cylinder (14) and said piston (16),
said piston (16) comprising a piston crown (20) adapted to face said combustion chamber (18), said piston crown (20) comprising a piston bowl surface (40), recessed in said piston (16) and circumferentially extending around a piston bowl centre axis (42) adapted to extend in a direction parallel to the reciprocal axis (A), said piston (16) also extending in a radial direction (R) being perpendicular to the extension of said piston bowl centre axis (42),
said piston bowl surface (40) defining a piston bowl (44) that, following the circumference of said piston bowl surface (40) around said piston bowl centre axis (42) in a plane perpendicular to said piston bowl centre axis (42), comprises a set of circumferentially spaced apart dividing protrusions (46, 48, 50, 52) and a set of circumferentially spaced apart colliding protrusions (54, 56, 58, 60) wherein each two dividing protrusions (46, 48, 50, 52) in said set of circumferentially spaced apart dividing protrusions (46, 48, 50, 52) is separated by at least one colliding protrusion (54, 56, 58, 60) of said set of circumferentially spaced apart colliding protrusions (54, 56, 58, 60), each dividing protrusion (46, 48, 50, 52) in said set of circumferentially spaced apart dividing protrusions being adapted to receive fuel from a fuel injector (30) of said internal combustion engine (12),
said piston crown (20) further comprising a piston rim portion (62), wherein said piston rim portion (62) encloses said piston bowl surface (40) wherein a piston bowl opening (63) is formed in an intersection between said piston rim portion (62) and said piston bowl surface (40),
said piston bowl surface (40) having a piston bowl depth (64) being a maximum distance from said piston rim portion (62) to a portion of said piston bowl surface (40) in a direction parallel to said piston bowl centre axis (42),
said piston bowl (44) having a piston bowl reference radius (72) being a radius of a reference circle having the same area as an area, in the plane perpendicular to said piston bowl centre axis (42), radially outwardly enclosed by said piston bowl surface (40) at a position along said piston bowl centre axis (42) being located at half the piston bowl depth (68) into said piston bowl (44),
said piston crown (20) having a piston crown radius (78), being a largest distance from said piston bowl centre axis (42) to a portion of said piston crown (20) in said plane perpendicular to said piston bowl centre axis (42),
a ratio between said piston bowl reference radius (72) and said piston crown radius (78) being in the range of 0.8 to 0.4, preferably in the range of 0.7 to 0.5.

2. The piston (16) of claim 1, wherein at least one, preferably each one, of said colliding protrusion in said set of circumferentially spaced apart colliding protrusions (54, 56, 58, 60), at a position along said piston bowl centre axis (42) being located at half the piston bowl depth (68) into said piston bowl (44), has a colliding protrusion portion (80) being the portion of the colliding protrusion located closest to said piston bowl centre axis (42) in said radial direction (R), said colliding protrusion portion (80) being located at a colliding protrusion portion radial distance (82) from said piston bowl centre axis (42), a ratio between said colliding protrusion portion radial distance (82) and said piston bowl reference radius (72) being in the range of 0.9 - 0.6, preferably in the range of 0.9 - 0.7.

3. The piston (16) of claim 1 or claim 2, wherein at least one, preferably each one, of said dividing protrusion in said set of circumferentially spaced apart dividing protrusions (46, 48, 50, 52), at a position along said piston bowl centre axis (42) being located at half the piston bowl depth (68) into said piston bowl (44), has a dividing protrusion portion (84) being the portion of the dividing protrusion located closest to said piston bowl centre axis (42) in said radial direction (R), said dividing protrusion portion (84) being located at a dividing protrusion portion radial distance (86) from said piston bowl centre axis (42), a ratio between said dividing protrusion portion radial distance (86) and said piston bowl reference radius (72) being in the range of 0.9 - 0.6, preferably in the range of 0.9 - 0.7.

4. The piston (16) of any one of the preceding claims, wherein said piston bowl (44) has a piston bowl maximum radius (88) being the largest radial distance, in the plane perpendicular to said piston bowl centre axis (42), between said piston bowl centre axis (42) and said piston bowl surface (40) at a position along said piston bowl centre axis (42) being located at half the piston bowl depth (68) into said piston bowl (44), a ratio between said piston bowl reference radius (72) and said piston bowl maximum radius (88) being less than 0.8, preferably less than 0.7, more preferred less than 0.6.

5. The piston (16) of any one of the preceding claims, wherein said piston bowl (44) has a piston bowl maximum radius (88) being the largest radial distance, in the plane perpendicular to said piston bowl centre axis (42), between said piston bowl centre axis (42) and said piston bowl surface (40) at a position along said piston bowl centre axis (42) being located at half the piston bowl depth (68) into said piston bowl (44), said piston bowl (44) having a piston bowl reference circumference (92) being the circumference of a circle having said piston bowl maximum radius (88), said piston bowl (44) having a piston bowl circumference (94), in the plane perpendicular to said piston bowl centre axis (42), of said piston bowl surface (40) at a position along said piston bowl centre axis (42) being located at half the piston bowl depth (68) into said piston bowl (44), a ratio between said piston bowl circumference (94) and said piston bowl reference circumference (92) being greater than 1.1, preferably greater than 1.2.

6. The piston (16) of any one of the preceding claims, wherein a ratio between said piston bowl depth (64) and said piston bowl reference radius (72) is at least 0.2, preferably at least 0.4.

7. The piston (16) of any one of the preceding claims, wherein said set of
circumferentially spaced apart dividing protrusions (46, 48, 50, 52) contains 1-6, preferably 2-6, more preferred 4, dividing protrusions (46, 48, 50, 52).

8. An internal combustion engine (12) for gaseous fuel, said internal combustion engine (12) comprising a cylinder (14) and a piston (16) according to any one of the preceding claims, said internal combustion engine (12) further comprising a fuel injector (30) adapted to inject gaseous fuel into said combustion chamber (18) such that an individual gas jet is directed towards each dividing protrusion of said set of circumferentially spaced apart dividing protrusions (46, 48, 50, 52).

9. The internal combustion engine (12) of claim 8, wherein said fuel injector (30) injects gas into said combustion chamber (18) such that each individual gas jet forms an angle (98) being equal to or greater than 65°, preferably equal to or greater than 70°, with said piston bowl centre axis (42).

10. The internal combustion engine (12) of claim 8 or claim 9, wherein said fuel injector (30) contains a set of fuel injector openings, said set of fuel injector openings containing 1 - 6, preferably 2-6, more preferred 4, fuel injector openings (100), each fuel injector opening (100) in said set of fuel injector (30) openings being adapted to inject an individual gas jet into said combustion chamber (18), said set of circumferentially spaced apart dividing protrusions (46, 48, 50, 52) containing a number of dividing protrusions (46, 48, 50, 52) being equal to the number of fuel injector (30) openings in said set of fuel injector (30) openings.

11. The internal combustion engine (12) of any one of claims 8 to 10, further comprising a cylinder head (22) with a cylinder head surface (24) facing said piston crown (20) and at least partially delimiting said combustion chamber (18), said piston (16) being adapted to move reciprocally in said cylinder (14) of said internal combustion engine (12) along said reciprocal axis (A) between a top dead centre and a bottom dead centre, the internal combustion engine (12) being such that when said piston (16) is in said top dead centre, a smallest distance (102) along said reciprocal axis (A) between said piston crown (20) and said cylinder (14) head is at least 2 mm, preferably at least 3 mm.

12. The internal combustion engine (12) of any one of claims 8 to 11, wherein said fuel injector (30) is adapted to discharge gaseous fuel at a mean fuel injector exit velocity being equal to or exceeding 800 m/s, preferably equal to or exceeding 1200 m/s, more preferred equal to or exceeding 1600 m/s.

13. The internal combustion engine (12) of any one of claims 8 to 12, wherein said fuel injector (30) is adapted to discharge gaseous fuel at a discharge pressure being within the range of 150-500 bar, preferably in the range of 200-300 bar when the internal combustion engine (12) is operating at medium load alternatively in the range of 300-400 bar when the internal combustion engine (12) is operating at high load.

14. The internal combustion engine (12) of any one of claims 8 to 13, wherein said fuel injector (30) is adapted to inject hydrogen fuel into said combustion chamber (18), preferably said internal combustion engine (12) comprises a source (104) of hydrogen fuel adapted to be in selective fluid communication with said fuel injector (30).

15. A vehicle (10) comprising the piston (16) of any one of claims 1 - 7 or an internal combustion engine (12) according to any one of claims 8 - 14.
